# EUROPEAN PATENT APPLICATION

(11) **EP 3 269 441 A1**
(43) Date of publication of application: **17.01.2018**
(21) Application number: 16179033.2
(22) Date of filing: 12.07.2016
(51) Int. Cl.: B01D 53/22, B01D 53/04

(54) **DEVICE AND PROCESS FOR CONTROLLED GAS TRANSPORT ON METAL-ORGANIC FRAMEWORK MEMBRANES**

(71) Applicant: Leibniz Universität Hannover, 30167 Hannover (DE)
(72) Inventor: Caro, Jürgen, Prof. Dr., 13129 Berlin (DE); Knebel, Alexander, MSc, 30165 Hannover (DE)
(74) Representative: Taruttis, Stefan Georg

(57) **Abstract**

The invention relates to a device and a process for controlled transport of a gaseous compound into and/or out of a metal-organic framework (MOF) material, which preferably is in the form of a MOF membrane, and to the use of the device as an absorption and/or desorption device for a gaseous compound, and/or as a separation device for a gaseous compound from a gas composition.

## Description

The present invention relates to a device and a process for controlled transport of a gaseous compound into and/or out of a metal-organic framework (MOF) material, which preferably is in the form of a MOF membrane, and to the use of the device as an absorption and/or desorption device for a gaseous compound, and/or as a separation device for a gaseous compound from a gas composition.

The device and the process allow to control the flux and/or the composition of a gaseous compound, which can be a component of a gas composition, into the MOF material and/or out of the MOF material. For use in gas separation processes, the device and process of the invention allow to control the flux and/or selectivity of the gaseous compound contained in the gas composition, wherein the gaseous compound permeates across a MOF membrane. For use in absorption and/or desorption processes of gaseous compounds in and from MOF material, and for use in separation of a gaseous compound from a gas composition, the device and process of the invention allow control of the rate and/or selectivity of the absorption and/or desorption, and of the permeation of the gaseous compound, respectively. As used herein, the gas gaseous compound can comprise or consist of one or more molecule species.

### State of art

Darestani et al., Journal of Membrane Science 449 (2014) 158-168 describe that the structure of polymer membranes can be influenced by exposing the membrane to a high electric field at a temperature between the glass transition temperature and melting temperature of the membrane and then cooled. The resulting polymer membranes showed different liquid filtration properties.

WO 2013/177199A1 describes the production of metal-organic framework (MOF) membranes by dip-coating a porous polymer, e.g. in the form of hollow tubes, into a suspension of MOF nanocrystals as a seed, followed by drying and growing larger MOF crystals on the porous polymer from a MOF precursor solution at temperatures as low as 65 °C.

WO2014/115177 A2 describes an in situ production process for a MOF-polymer composite, e.g. a zinc imidazolate framework on polysulfone without pre-seeding of MOF or polymer modification. The MOF layer can substantially cover the porosity of the membrane.

For gas separation, e.g. of CO₂ from natural gas, US 7,637,983 B1 describes membranes of polymers forming a continuous phase that contains dispersed MOF particles having highly crystalline zeolite-like structures. The polymer is a glassy polymer, e.g. polyimide, polyetherimide, cellulose acetate, polysulfone or polyethersulfone. The MOF particles are mixed with the polymer in a solvent and formed by solution casting of the slurry of the MOF particles in the polymer in solvent.

For gas phase hydrocarbon filtration, WO 2012/164395 A1 and US 9248400 B2 describe the production of a zeolitic imidazole framework (ZIF) membrane by deposition of ZIF seed particles on an α-alumina, glass, polymer or stainless steel support, and growing ZIF crystals from solution.

In gas separation, these known processes using MOF in the form of pure or composite membranes have the disadvantage that they show a permanent gas flux through the membrane, and that the composition of a permeate is constant for a given original gas composition. A further disadvantage can be that molecules which are larger than expected from the pore size can pass the membrane, e.g. due to lattice vibrations and/or linker flip-flop rotational motions.

### Object of the invention

It is an object of the invention to provide an alternative device and process for transport of a gaseous compound into and out of a MOF material, and transport of a gaseous compound from a gas composition across a MOF membrane, which is controllable for a given membrane. Preferably, the invention provides a device and process for controlling the flux and/or the composition of a gaseous compound permeating through a metal-organic framework membrane.

### Description of the invention

The invention achieves the object by the features of the claims, especially by a device and a process as well as by the use of the device as an absorption and/or desorption device and/or as a separation device for a gaseous compound by contacting a gaseous compound with a MOF material, wherein optionally the gaseous compound is contained in a gas composition. The invention is characterized by the application of an electric field to the MOF material during absorption, desorption and/or permeation of the gaseous compound. It has been found that the application of an electric field to the MOF material changes its absorption, desorption and/or permeation of the gaseous compound. In detail, it has been found that e.g. for zeolitic imidazole framework (ZIF) materials as the MOF material, the application of an electric field changes the flux and composition of the permeating gaseous compound from a gas composition, and that the application of an electric field changes the desorption of a gaseous compound.

The electric field can be applied to the MOF material by generating an electric field between a pair of electrodes, the electric field encompassing the MOF material. Preferably, the electrodes are arranged at opposite sides of the MOF material, e.g. the electrodes can form a capacitor containing the MOF material between its electrodes. The electrodes can be arranged with a spacing from the MOF material, or the electrodes can be arranged adjacent the MOF material, e.g. in direct electric contact with the MOF material. Preferably, both the electrodes extend over the cross-section of the MOF material that is parallel to the electrodes.

At least one of the electrodes, optionally both electrodes, can have a closed surface or can have openings allowing the passage of gas across the electrode, e.g. at least one electrode can be formed as a grid of a conductive material.

The electrodes are electrically connected with opposite polarities of a voltage source. The voltage source can be disposed to provide the electrodes with constant voltage (DC) or with alternating voltage (AC). For adsorption and/or desorption of a gaseous compound, it is preferred that the voltage source is disposed to provide the electrodes with alternating voltage. For permeation of a gaseous compound from a gas composition through the MOF material, e.g. for separation of a gaseous compound from a gas composition, it is preferred that voltage source is disposed to provide the electrodes with constant voltage. Optionally, the voltage source can be disposed to provide pulsed voltage, e.g. at a frequency of at least 0.01 per min, preferably at least 0.1 per min, e.g. up to 50 Hz, e.g. up to 10 or up to 2 Hz.

For absorption and/or for desorption, the MOF material can be in particulate form, e.g. as a bed material, preferably encased in a container having an inlet and/or outlet for a gas component.

Generally, the MOF material can be in the form of a membrane, e.g. for absorption and/or desorption one or at least two MOF membranes arranged with a spacing in parallel or in a spiral shape. The MOF material can e.g. be in the form of MOF material particles dispersed in a polymer forming a membrane, in the form of a layer arranged on a carrier, optionally forming a membrane. The polymer preferably is permeable for the gaseous compound, e.g. porous, and the polymer can e.g. be polyimide, polyetherimide, cellulose acetate, polysulfone and polyethersulfone as known in the art. The carrier preferably is permeable for the gaseous compound and can e.g. be a polymer, e.g. the same polymer forming a membrane, or a porous ceramic material, e.g. α-Al₂O₃, or the carrier can be impermeable to the gaseous compound, e.g. steel, nickel, glass. Alternatively, the MOF material can consist of MOF material, e.g. or in particulate form.

For separation of a gaseous compound from a gas composition, it is preferred that the MOF material is in the form of a membrane which is arranged in a housing, the MOF membrane separating a first inlet port and a first outlet port on one side of the MOF membrane from a second outlet port arranged on the opposite side of the MOF membrane.

The MOF material preferably is a zeolitic imidazole framework (ZIF) material, e.g. ZIF-90, ZIF-8, MIL-96, or mixtures of at least two of these.

The gaseous compound can e.g. be H₂, CO₂, NOₓ, hydrocarbons, and mixtures of at least two of these.

It is presently assumed that the electric field applied to a MOF material causes the suppression of lattice vibrations of the metal ions that are held by anionic linker molecules and suppression of thermally driven linker distortion in a MOF material. This suppression could fixate the pore size and increases the selectivity of the MOF material for a gaseous compound.

The invention is now described in greater detail by way of examples with reference to the figures, which schematically show in
- Fig. 1 a device and process according to the invention, and
- Fig. 2 a graph for the permeance of a MOF material in presence and absence of an electric field.

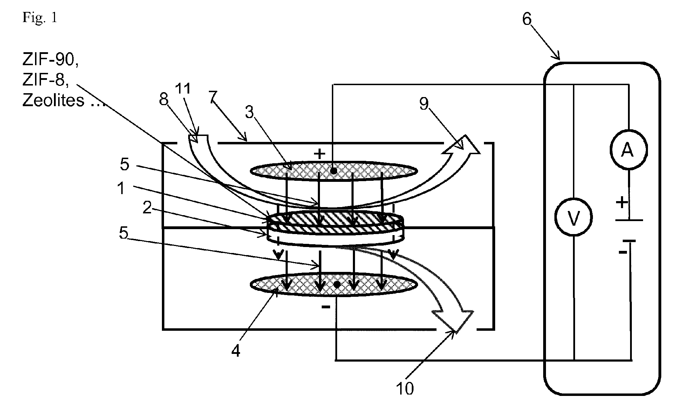

Figure 1 depicts a MOF material 1 arranged as a layer on a carrier 2 which is permeable for a gaseous compound. A pair of electrodes 3, 4 is arranged with a spacing on both sides of the MOF material 1. As preferred, the electrodes 3, 4 are parallel to the MOF material 1 layer. The electrodes extend over the MOF material 1 in order to generate an electric field 5 encompassing the entire MOF material 1. The electrodes are electrically connected to opposite polarity contacts of a voltage source 6. The MOF material 1 is arranged in a housing 7 and separates a first inlet port 8 and a first outlet port 9 from a second outlet port 10.

In the process, the voltage source provides voltage to the electrodes 3, 4 during absorption of a gaseous compound 11 into the MOF material 1 and/or during desorption of a gaseous compound 11 from the MOF material 1. For absorption, the gaseous compound 11 is contacted with the MOF material 1, e.g. introduced into the housing 7 via first inlet port 8. For desorption, the gaseous compound can exit from the housing via first outlet port 9 and/or in case the carrier 2 is permeable, the gaseous compound can exit from the housing via second outlet port 10.

For gas separation the gaseous compound 11 is contained in a gas composition that is fed into the first inlet port 8, a retentate gas fraction can exit via first outlet port 9, which retentate gas is depleted for the gaseous compound 11 permeating through the MOF material 1 and carrier 2. The permeated gaseous compound 12 can exit the housing via second outlet port 10. During the permeation, the electrodes 3, 4 are provided with voltage generating an electric field 5 encompassing the MOF material 1 in order to change the permeating flux and/or the constituents of the permeated gaseous compound 8.

### Example 1: Permeation of CO₂ through MOF membrane

A MOF membrane of a ZIF-8 layer supported by a carrier was arranged in a device as generally shown in Fig. 1. As an example for a gaseous compound, CO₂ was introduced into the housing via first inlet port 8 and allowed to exit via first outlet port 9 and via second outlet port 10, which was separated by the MOF material. The MOF material ZIF-8 was grown on a carrier formed by a ceramic disc comprising α-Al₂O₃ having an asymmetric structure and a mean pore diameter of 70 nm (obtained from Inocermic, Hermsdorf, Germany). The electrodes 3, 4 were formed by metal meshes. When a constant inflow of CO₂ was established, voltage was supplied to electrodes 3, 4 sufficient to generate a constant electric field of 500 V/mm between the electrodes. The voltage was switched on after approx. 76 min.

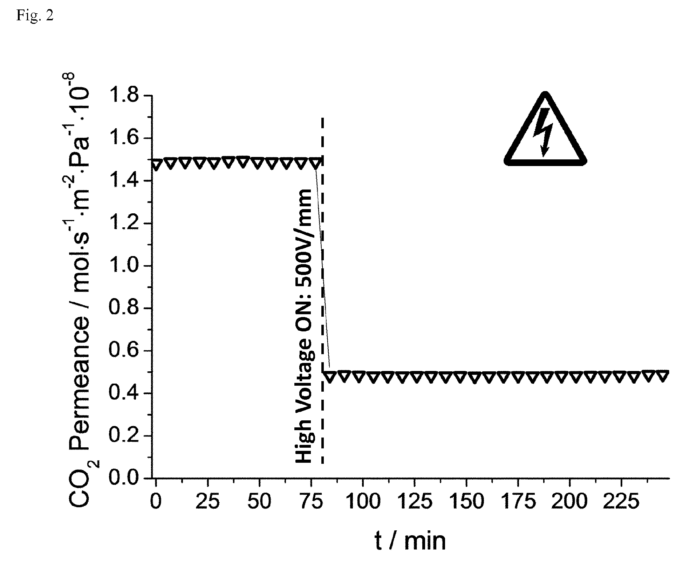

Fig. 2 depicts the permeation rate of CO₂ across the MOF membrane, showing that after switching on the electric field, after an equilibration or switching period about 8 min the permeation rate is drastically reduced by a factor of about 3.

### Example 2: Separation of hydrogen from a mixture of hydrogen and CO₂

As a MOF material, ZIF-90 was grown on a carrier formed by a ceramic disc comprising α-Al₂O₃ having an asymmetric structure and a mean pore diameter of 70 nm (obtained from Inocermic, Hermsdorf, Germany) to form a MOF membrane. The MOF membrane was arranged in a device according to Fig. 1, using electrodes 3, 4 formed by metal meshes. A gas composition of equimolar contents of H₂ and CO₂ was introduced into the housing via first inlet port 8. In the absence of an electric field, the permeated gaseous compound was 70% H₂ and 30% CO₂. When applying voltage to generate a constant electric field of 500 V/mm, after 8 min the permeated gaseous compound is 85% H₂ and 15% CO₂. This demonstrates that the electric field influences the selectivity of the MOF material for a gaseous compound.

### Example 3: Separation of hydrogen from a mixture of hydrogen and CO₂

As a MOF material, MIL-96 was grown on a carrier formed by a ceramic disc comprising α-Al₂O₃ having an asymmetric structure and a mean pore diameter of 70 nm (obtained from Inocermic, Hermsdorf, Germany) to form a MOF membrane. The MOF membrane was arranged in a device according to Fig. 1, using electrodes 3, 4 formed by metal meshes. A gas composition of equimolar contents of H₂ and CO₂ was introduced into the housing via first inlet port 8. In the absence of an electric field, the permeated gaseous compound was 70% H₂ and 30% CO₂. When applying alternating voltage to generate an electric field of 500 V/mm alternating at a frequency of 0.1 per min, the permeated gaseous compound is 90% H₂ and 10% CO₂ at full field strength, the composition of the permeated gaseous compound alternating with the same frequency of 0.1 per min as the voltage. This demonstrates that the electric field influences the selectivity of the MOF material for a gaseous compound.

### Example 4: Separation of hydrogen from a mixture of hydrogen and CO₂

As a MOF material, 10 vol.-% MIL-125, crystal size 2 - 4 µm, was dispersed in 90 vol.-% polyimide (Matrimid) to form a MOF material containing membrane. The MOF membrane was arranged in a device according to Fig. 1, using electrodes 3, 4 formed by metal meshes. A gas composition of equimolar contents of H₂ and CO₂ was introduced into the housing via first inlet port 8. In the absence of an electric field, the permeated gaseous compound is 75% H₂ and 25% CO₂. When applying voltage to generate a constant electric field of 500 V/mm, after 8 min the permeated gaseous compound is 95% H₂ and 5% CO₂. This demonstrates that the electric field influences the selectivity of the MOF material for a gaseous compound.

### Example 5: Desorption of a gaseous compound from MOF material

Using ZIF-8 in powder form as a MOF material, NO was adsorbed into the pores of the MOF material at 12 bar. This particulate MOF material was positioned between two metal mesh electrodes to which alternating voltage was applied at a frequency of 2 Hz at room temperature at ambient 1 bar pressure. The application of the electric field resulted in the release of the adsorbed NO. This shows that the application of an electric field influences adsorption of a gaseous compound to a MOF material and desorption of a gaseous compound from a MOF material.

## Claims

1. Process for controlling the absorption and/or desorption of a gaseous compound (11), comprising the step of contacting the gaseous compound (11) with a MOF material (1), **characterized by** a step of applying an electric field to the MOF material (1).

2. Process according to claim 1, **characterized in that** the gaseous compound (11) is contained in a gas composition.

3. Process according to one of the preceding claims, **characterized by** comprising a step of adsorbing the gaseous compound (11) from the gas composition into the MOF material (1) without applying an electric field to the MOF material (1) and of desorbing the gaseous compound (11) from the MOF material (1) by applying the electric field to the MOF material (1).

4. Process according to one of the preceding claims, **characterized in that** the electrodes (3, 4) are spaced from the MOF material (1) or directly contact the MOF material (1).

5. Process according to one of the preceding claims, **characterized in that** the MOF material (1) is arranged in a housing (7) and separates a first inlet port (8) and a first outlet port (9) on its one side from a second outlet port (10) on its other side, a gas composition containing the gaseous compound (11) is introduced into the first inlet port (8) and a fraction of the gas composition exits from the second outlet port (10), in which fraction at least one of the components of the gas composition is enriched to form the gaseous compound (11).

6. Process according to one of the preceding claims, **characterized in that** the gaseous compound (11) comprises H₂, CO₂, NO_{X}, hydrocarbons, or a mixture of at least two of these.

7. Process according to one of the preceding claims, **characterized in that** the gaseous compound (11) is enriched from a gas composition containing the gaseous compound (11).

8. Process according to one of the preceding claims, **characterized in that** the electric field (5) is constant.

9. Device for use in a process according to one of the preceding claims, comprising a MOF material (1), **characterized by** a pair of electrodes (3, 4) arranged to generate an electric field (5) encompassing the MOF material (1).

10. Device according to claim 9, **characterized in that** the electrodes (3, 4) are connected to a controlled voltage source (6) disposed to generate constant voltage or are connected to a controlled voltage source (6) disposed to generate alternating voltage.

11. Device according to one of claims 9 to 10, **characterized in that** the electrodes (3, 4) are spaced from the MOF material (1).

12. Device according to one of claims 9 to 11, **characterized in that** the electrodes (3, 4) are arranged to directly electrically contact the MOF material (1).

13. Device according to one of claims 9 to 12, **characterized in that** the MOF material (1) is arranged in a housing (7) having a first inlet port (8) and a first outlet port (9) and a second outlet port (10) which is separated by the MOF material (1) from the first inlet port (8) and the first outlet port (9).

14. Device according to one of claims 9 to 13, **characterized in that** the MOF material (1) is in the form of particles dispersed in a polymer, in the form of a layer arranged on a carrier (2), or consists of the MOF material (1).

15. Device according to one of claims 9 to 14, **characterized in that** the electrodes (3, 4) form a capacitor.
